# NEUE EUROPÄISCHE PATENTSCHRIFT

(11) **EP 0 444 396 B2**
(45) Veröffentlichungstag und Bekanntmachung des Hinweises auf die Entscheidung über den Einspruch: **02.11.2000**
(45) Hinweis auf die Patenterteilung: 09.07.1997
(21) Anmeldenummer: 91100054.5
(22) Anmeldetag: 02.01.1991
(51) Int. Cl.: G06K 7/06

(54) **Kontaktiereinrichtung für ein SI-Modul**
Connection device for a Si-module
Dispositif de connexion pour un module Si

(30) Priorität: 30.01.1990 DE 4002680
(43) Veröffentlichungstag der Anmeldung: 04.09.1991
(73) Patentinhaber: AMPHENOL-TUCHEL ELECTRONICS GmbH, D-74080 Heilbronn (DE)
(72) Erfinder: Reichardt, Manfred, W-7102 Weinsberg (DE); Schuder, Bernd, W-7103 Schwaigern (DE)
(74) Vertreter: Wagner, Karl H., Dipl.-Ing.

(56) Entgegenhaltungen:
- EP-A- 0 231 090
- EP-A- 0 325 458
- DE-A- 2 329 426
- DE-A- 3 343 757
- DE-A- 3 810 275
- DE-U- 8 703 077
- FR-A- 2 633 754
- US-A- 4 752 234
- US-A- 4 820 186

## Beschreibung

Die Erfindung bezieht sich auf eine Kontaktiereinrichtung und zwar insbesondere für ein SI-Modul.

Das Wort "SIM" steht für "Subscriber Identity Module", d. h. es handelt sich hier um ein elektronisches Element beispielsweise eine integrierte Schaltung, die über die Identität eines Teilnehmers beispielsweise an einem Telefonsystem Auskunft gibt. Das Kontaktbild eines solchen Moduls entspricht dem der IC-Karte nach ISO 7816, während die Außenmaße des SIM erheblich kleiner sind, und zwar 25 mm x 15 mm gegenüber 85,5 mm x 54 mm.

Die Erfindung bezweckt insbesondere eine Kontaktiervorrichtung für ein SIM zu entwickeln, wobei die Außenmaße dieser Kontaktiervorrichtung die Abmessungen des SIM nur unwesentlich übersteigen sollen. Die Dicke der Kontaktiervorrichtung soll vorzugsweise kleiner sein als 3 mm. Ferner sollen die Kontaktkräfte gleich oder größer sein als bei den Kontaktiervorrichtungen für die größeren IC-Karten. Weiterhin soll vorzugsweise ein Schalter vorzusehen sein, der nach dem Aufsetzen der sogenannten Lesekontakte der Kontaktiervorrichtung schließt oder öffnet. Ferner soll für bestimmte Anwendungsfälle eine Kontaktierung ohne Relativbewegung zwischen Leser und SIM-Karte realisierbar sein.

Die bekannten Kontaktiervorrichtungen für herkömmliche IC-Karten überschreiten entweder die Länge oder die Höhe der geforderten Maße, da sie gleiche Kontaktkräfte zwischen 0,2 und 0,4 N fordern, ohne Begrenzung der Außenmaße. Aus den Grenzbedingungen von Kontaktkraft und Federweg (zusammengesetzt aus Toleranzen von Kartendicke und Fertigungsgenauigkeit), ergeben sich Federelemente, die bei herkömmlicher Anordnung die geforderten Maße überschreiten.

Die vorliegende Erfindung sieht zur Vermeidung der Nachteile des Standes der Technik eine Kontaktiereinrichtung gemäß Anspruch 1 vor. Die erfindungsgemäße Kontaktiereinrichtung hat dem Vorteil, daß die Kontaktteilung halbiert ist und dadurch die Länge um den Reihenabstand reduziert.

Ein Deckel der Kontaktiereinrichtung kann als Kartenhalter ausgebildet sein.

Ein Anwendungsgebiet der erfindungsgemäßen Kontaktiereinrichtung für ein SI-Modul besteht bei den sogenannten Mobiltelefonen. Hier könnte die Kontaktiereinrichtung im Mobiltelefon eingebaut sein und die den Teilnehmer betreffende Information würde durch die Kontaktiereinrichtung aus dem SI-Modul ausgelesen werden.

FR-A-2 633 754 zeigt eine Kontaktiereinrichtung mit einem Kontaktblock in dem Kontaktstangen angeordnet sind. Diese ragen, teilweise in einandergreifend angeordnet vom Kontaktblock aus nach oben bzw. durch Löcher im Kontaktblock nach unten.

Weiter Vorteile, Ziele und Einzelheiten der Erfindung ergeben sich aus der Beschreibung von Ausführungsbeispielen anhand der Zeichnungen; die Zeichnungen zeigen:
- Fig. 1: schematisch zwei Kontaktelemente für eine herkömmliche Chipkarte;
- Fig. 2: schematisch eine andere Anordnung der Kontaktelemente;
- Fig. 3: eine weitere schematische Anordnung der Kontaktelement;
- Fig. 4: die Anordnung der Kontaktelemente gemäß Fig. 1 für eine Kontaktiereinrichtung für ein SI-Modul;
- Fig. 5: schematisch die bevorzugte Anordnung von Kontakten für die Kontaktiervorrichtung für ein SI-Modul;

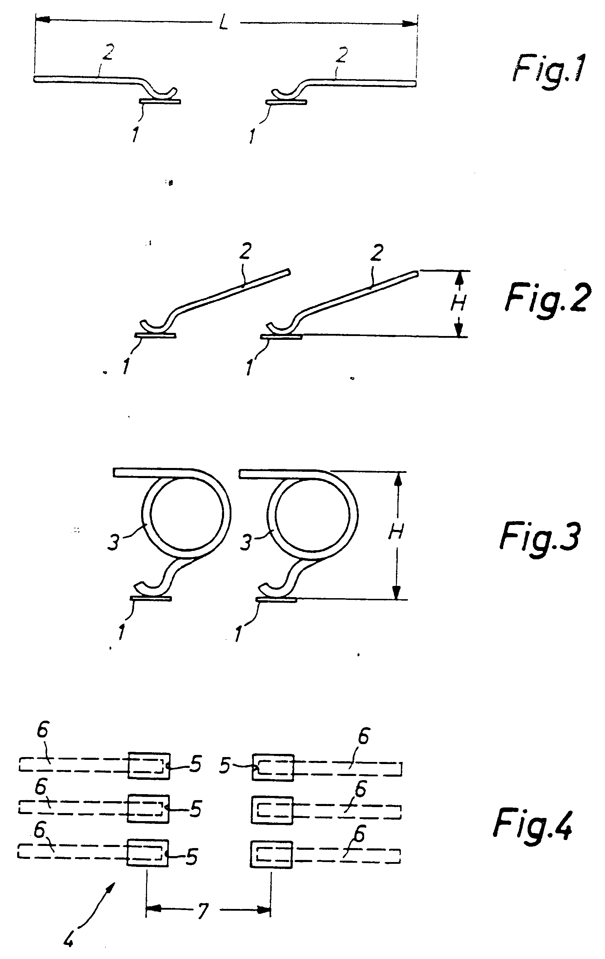

In Fig. 1 sind zwei SI-Modul- oder Kartenkontakte 1 dargestellt, die durch Kontaktelemente 2 kontaktiert werden. Diese bekannte Kontaktanordnung bedeutet eine Überschreitung der zulässigen Länge L.

Bei der Anordnung gemäß Fig. 2 wird die zulässige Höhe H überschritten.

Das gleiche gilt auch für die Anordnung der Kontakte 3 gemäß Fig. 3.

In Fig. 4 ist die Draufsicht auf eine Kartenaufnahmekammer 4 dargestellt, die Ausschnitte 5 besitzt in deren Bereich Kontaktelemente 6 enden und zwar zur Kontaktierung mit den hier nicht gezeigten Modulkontakten 1, wobei der vorgegebene Reihenabstand mit 7 bezeichnet ist.

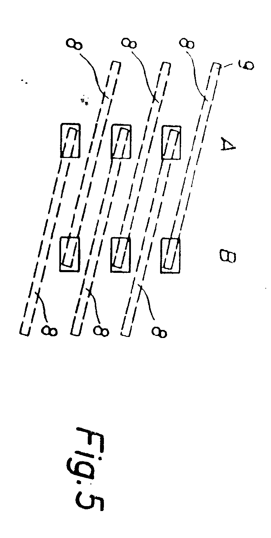

Fig. 5 zeigt eine bevorzugte Anordnung der Kontaktelemente 8, gemäß welcher die Kontaktteilung halbiert ist um dadurch die Länge L um den Reihenabstand 7 zu reduzieren.
Man erkennt, daß die Kontakte für die Reihe A zwischen der Reihe B hindurchgeführt werden und umgekehrt. Für Reihe A und auch für die Reihe B können die gleichen Kontakte oder -elemente 8 Verwendung finden, was fertigungstechnisch vorteilhaft ist. Die Anschlußenden 9 sind hier gegenüber liegend angeordnet.

Obwohl die gemäß der Erfindung vorgesehenen Kontaktanordnungen besonders für SI-Module vorgesehen sind, so können doch mit der erfindungsgemäßen Anordnung auch besonders kurze Kontaktiereinrichtungen für IC-Karten realisiert werden.

## Patentansprüche

1. Kontaktiereinrichtung für in zwei Kontaktreihen (A, B) von einander direkt gegenüberliegend angeordneten Kartenkontakten (1), insbesondere die einer SIM-Karte, wobei
Kontaktelemente (8) der Kontaktiereinrichtung für die beiden Kontaktreihen (A, B) nebeneinander liegen,
wobei die Kontaktelemente (8) für die eine Reihe (A) zwischen denen für die andere Reihe (B) hindurchgeführt werden und umgekehrt, und
wobei die Kontaktelemente (8) für die Reihen (A, B) gleichlang sind und ihre Anschlußenden (9) auf entgegengesetzten Seiten liegen.

## Claims

1. A contacting apparatus for card contacts (1) in particular card contacts of a SIM-card, said card contacts being arranged directly opposite to each other in two rows (A, B) of contacts, wherein contact elements (8) of the contacting apparatus for said two rows (A, B) of contacts are arranged adjacent to each other, wherein the contact elements (8) for one row (A) are guided through between the contact elements for the other row (B) and vice versa, and
wherein the contact elements (8) for the rows (A, B) have the same length and termination ends (9) thereof are on opposite sides.

## Revendications

1. Dispositif de connexion pour des contacts de carte (1) disposés directement en vis-à-vis selon deux rangées de contacts (A, B), en particulier les contacts d'une carte SIM, les éléments de contact (8) du dispositif de connexion étant juxtaposés pour les deux rangées de contacts (A, B) , les éléments de contact (8) pour la première rangée (A) étant guidés entre ceux pour l'autre rangée (B) et inversement, et les éléments de contact (8) pour les rangées (A, B) étant de même longueur et leurs extrémités de raccordement (9) se trouvant sur des cotés opposés.
